# EUROPEAN PATENT APPLICATION

(11) **EP 4 446 483 A1**
(43) Date of publication of application: **16.10.2024**
(21) Application number: 22904203.1
(22) Date of filing: 06.12.2022
(51) Int. Cl.: D01F 9/00, C08B 37/00

(54) **WET-SPUN FIBERS, PRODUCTION METHOD THEREFOR, AND SUBMICRON FIBRILS AND PRODUCTION METHOD THEREFOR**

(30) Priority: 10.12.2021 JP 2021200613
(71) Applicant: National Institute of Advanced Industrial Science and Technology, Chiyoda-ku Tokyo 100-8921 (JP)
(72) Inventor: SHIBAKAMI, Motonari, Tsukuba-shi, Ibaraki 305-8560 (JP)
(74) Representative: Murgitroyd & Company
(86) International application number: PCT/JP2022/044817
(87) International publication number: WO 2023/106275

(57) **Abstract**

Provided are wet-spun fibers of β-1,3-glucan, the wet-spun fibers containing β-1,3-glucan as the only constituent molecule and a method for producing the same, and sub-micron fibrils and a method for producing the same.

The wet-spun fibers contain only β-1,3-glucan, represented by a specific Chemical Formula (1), as a constituent molecule. The production method of the wet-spun fibers includes preparing spun fibers from a β-1,3-glucan raw material, represented by the specific Chemical Formula (1), by a method (I) in which viscose is prepared from the β-1,3-glucan raw material, or a method (II) in which the β-1,3-glucan raw material is dissolved in a good solvent.

## Description

### TECHNICAL FIELD

The present invention relates to wet-spun fibers, production method therefor, and sub-micron fibrils and production method therefor.

### BACKGROUND

Rayon, which is known as a natural polymer-based wet-spun fiber, is usually referred to as a regenerated fiber with cellulose as the main raw material. Cellulose is a material derived from plants and is a polysaccharide composed of β-1,4-glucan.
As a spun fiber having, as a main raw material, a natural material which is a polysaccharide other than cellulose, Non-Patent Documents 1 and 2, for example, propose a spun fiber with chitin and a chitosan derivative as the main raw material.

Paramylon, which is a storage polysaccharide produced by Euglena, is a β-1,3-glucan with a structure in which glucose is linked by β-1,3 bonds. Paramylon is a polysaccharide produced by Euglena (algae), which is both an autotroph and a heterotroph, and is gaining interest as a material with high sustainability.
Paramylon has a specific helical structure, and if spun fibers containing only paramylon as a constituent molecule can be obtained, these obtained spun fibers are expected to be natural fibers capable of expressing various properties (e.g., high moisture absorption rate, and the like) derived from the above-mentioned helical structure.

Paramylon is extracted from Euglena cells as granules having a diameter of a few micrometers. In order to process paramylon into various materials, the paramylon granules need to be first dissolved and then processed into a desired shape. However, the paramylon granules do not dissolve in water or common organic solvents, and therefore are very difficult to process.

Patent Document 1 proposes a method for preparing cellulose fibers containing paramylon by adding paramylon granules in viscose in which cellulose derivatives are dissolved in an alkali aqueous solution, and thereafter performing wet-spinning. However, the amount of paramylon contained in the wet-spun fibers in Patent Document 1 is approximately 0.5-10% by weight, and there are no reports of wet-spun fibers with 100% paramylon. Due thereto, there is no evaluation of the presence or absence of the above-mentioned properties that are expected to be exhibited when only paramylon is spun and made into fiber.

Dissolving paramylon by chemical modification is known as one of the methods for using paramylon as a fiber raw material. The present inventors hitherto investigated a method for acetylation of paramylon to prepare acetylated paramylon, and thereafter performing melt spinning (Non-Patent Document 3). Wet-spun fibers of acetylated paramylon, which are semi-synthetic fibers, are inferred to have biodegradability, but these wet-spun fibers have a structure which differs from the structure of natural paramylon (β-1,3-glucan) and therefore cannot be considered natural fibers.
Patent Document 1: JP 6654264 B
Patent Document 2: JP 2021-036039 A
Patent Document 3: JP 2020-090744 A

Non-Patent Document 1: Journal of Applied Polymer Science, 110,1208 (2008)
Non-Patent Document 2: Carbohydrate Polymers, 47, 121 (2002)
Non-Patent Document 3: Heliyon, 5(11), e02843 (2019)

### SUMMARY OF INVENTION

As a result of diligent studies, the present inventors discovered that wet-spun fibers containing β-1,3-glucan as the only constituent molecule can be obtained by a method in which wet spinning is performed while regenerating β-1,3-glucan by chemically modifying β-1,3-glucan to prepare viscose, and extruding the viscose through a nozzle into a coagulation liquid, or a method in which wet spinning is performed by extruding a dope solution, in which β-1,3-glucan is dissolved in a good solvent, through a nozzle into a coagulation liquid. Even more surprisingly, the present inventors also discovered that sub-micron fibrils containing only β-1,3-glucan as a constituent molecule can be prepared under easier conditions than rayon by mechanically fibrillating the obtained wet-spun fibers in water.

Small fibers (fibrils) having a fiber diameter of less than 1 µm (sub-micron) are known to have a large specific surface area and excellent properties as a reinforcing filler. However, since cellulose materials are rigid materials, it is not possible to mechanically fibrillate rayon directly to obtain cellulose fibrils. In contrast therewith, Patent Documents 2 and 3 describe a method for producing cellulose fine fibers by the steps of: (1) preparing alkaline cellulose with pulp (including cellulose) as the raw material; (2) reacting the alkaline cellulose with carbon bisulfide to prepare cellulose xanthate; (3) dispersing the cellulose xanthate in water, and thereafter performing a homogenization treatment to prepare fine fibers of cellulose xanthate (cellulose xanthate nanofibers); and (4) treating the obtained cellulose xanthate nanofibers with sulfuric acid to obtain regenerated cellulose nanofibers. However, even with this method, rayon is required to be subjected to three steps: a chemical modifying step, a fibrillating step, and a regenerating step. The present inventors discovered that sub-micron fibrils containing only β-1,3-glucan can be prepared by fibrillating the above-mentioned wet-spun fibers in water.

That is, the objective of the present invention is to provide: wet-spun fibers of β-1,3-glucan, containing β-1,3-glucan as the only constituent molecule, and a method for producing the same; and sub-micron fibrils and a method for producing the same.

The present invention includes the following embodiments.
[1] Wet-spun fibers containing only β-1,3-glucan, represented by the following Chemical Formula (1), as a constituent molecule 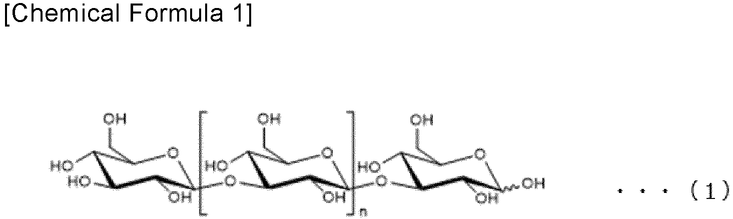 (in Chemical Formula (1), n represents an integer from 60 to 3,000).
[2] The wet-spun fibers according to [1], wherein the β-1,3-glucan contains regenerated paramylon.
[3] The wet-spun fibers according to [1], wherein the β-1,3-glucan contains purified paramylon.
[4] The wet-spun fibers according to [1] or [2], wherein the wet-spun fibers have a moisture absorption rate of more than 11% at a temperature of 20°C and a humidity of 65%.
[5] The wet-spun fibers according to any one of [1] to [4], wherein a monofilament of the wet-spun fibers is an aggregate of sub-micron fibrils containing only β-1,3-glucan as a constituent molecule.
[6] A method for producing the wet-spun fibers according to any one of [1] to [5], the method including: preparing spun fibers from a β-1,3-glucan raw material, represented by the following chemical formula (1), by a method (I) in which viscose is prepared from the β-1,3-glucan raw material, or a method (II) in which the β-1,3-glucan raw material is dissolved in a good solvent 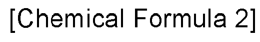 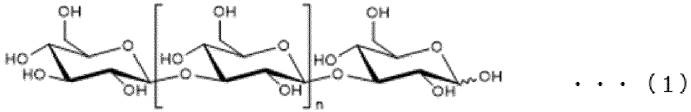 (in Chemical Formula (1), n represents an integer from 60 to 3,000).
[7] The method according to [6], wherein the method (I) includes: (i) preparing viscose by introducing xanthate groups to the β-1,3-glucan raw material in an alkali aqueous solution, and (ii) obtaining spun fibers of β-1,3-glucan by extruding the viscose through a nozzle into a coagulation liquid and removing the xanthate groups.
[8] The method according to [6], wherein the method (II) includes obtaining spun fibers of β-1,3-glucan by extruding a dope solution, in which the β-1,3-glucan raw material is dissolved in a good solvent containing an aprotic solvent, through a nozzle, into a coagulation liquid.
[9] The method according to any one of [6] to [8], wherein the methods (I) and (II) include dehydrating the spun fibers by immersing the obtained spun fibers in alcohol.
[10] The method according to any one of [6] to [9], wherein the β-1,3-glucan raw material contains paramylon.
[11] A compound for producing the wet-spun fibers according to any one of [1] to [5], wherein the compound is a β-1,3-glucan that contains xanthate groups, represented by the following chemical formula (2) 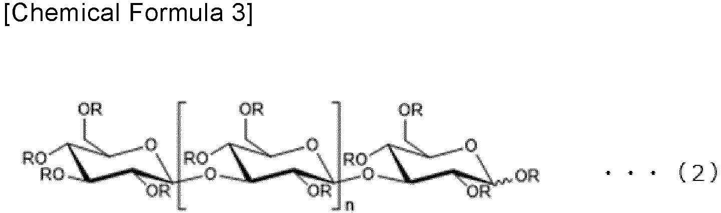 (in Chemical Formula (2), R represents hydrogen or C(=S) S⁻Na⁺, at least one R is C(=S) S⁻Na⁺, and n represents an integer from 60 to 3,000).
[12] A method for producing the compound for producing wet-spun fibers according to [11], the method including introducing xanthate groups to a β-1,3-glucan raw material, represented by the following Chemical Formula (1), in an alkali aqueous solution 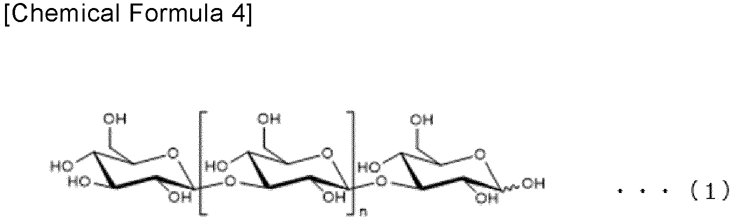 (in Chemical Formula (1), n represents an integer from 60 to 3,000).
[13] The method according to [12], wherein the β-1,3-glucan raw material contains paramylon.
[14] Sub-micron fibrils containing only β-1,3-glucan, represented by the following Chemical Formula (1), as a constituent molecule 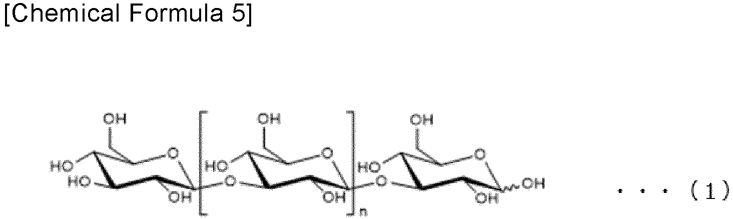 (in Chemical Formula (1), n represents an integer from 60 to 3,000).
[15] The sub-micron fibrils according to [14], wherein the β-1,3-glucan contains at least one paramylon selected from purified paramylon and regenerated paramylon.
[16] A method for producing the sub-micron fibrils according to [14] or [15], the method including fibrillating the wet-spun fibers according to any one of [1] to [5] in water.

According to the present invention, it is possible to provide wet-spun fibers of β-1,3-glucan, containing β-1,3-glucan as the only constituent molecule and a method for producing the same, and sub-micron fibrils and a method for producing the same.

### BRIEF DESCRIPTION OF DRAWINGS

FIG. 1A is a microscope photograph showing an overall view of wet-spun fibers 1 produced by a method (I).
FIG. 1B is a scanning electron microscope photograph of the wet-spun fibers 1.
FIG. 1C is an enlarged image of FIG. 1B.
FIG. 2A is a bright-field microscope photograph showing an overall view of wet-spun fibers 2 produced by a method (II).
FIG. 2B is a scanning electron microscope photograph of the wet-spun fibers 2.
FIG. 3A is a bright-field microscope photograph showing an overall view of wet-spun fibers 3 produced by the method (II).
FIG. 3B is a scanning electron microscope photograph of the wet-spun fibers 3.
FIG. 4A is a bright-field microscope photograph showing an overall view of wet-spun fibers 4 produced by the method (II).
FIG. 4B is a scanning electron microscope photograph of the wet-spun fibers 4.
FIG. 5A is a scanning electron microscope photograph showing one aspect of a wet-spun fiber with a peach skin on the surface thereof.
FIG. 5B is a scanning electron microscope photograph showing one aspect of a porous fiber.
FIG. 5C is an enlarged image of FIG. 5B.
FIG. 6 is a scanning electron microscope photograph showing the state of the wet-spun fibers 1 after being fibrillated for 20 minutes.
FIG. 7A is a scanning electron microscope photograph showing the state of the wet-spun fibers 2 after being fibrillated for three minutes.
FIG. 7B is a scanning electron microscope photograph showing the state of the wet-spun fibers 2 after being fibrillated for 15 minutes.
FIG. 7C is a scanning electron microscope photograph showing the state of the wet-spun fibers 2 after being fibrillated for 60 minutes.
FIG. 8A is a scanning electron microscope photograph showing the state of the wet-spun fibers 3 after being fibrillated for three minutes.
FIG. 8B is a scanning electron microscope photograph showing the state of the wet-spun fibers 3 after being fibrillated for 15 minutes.
FIG. 8C is a scanning electron microscope photograph showing the state of the wet-spun fibers 3 after being fibrillated for 60 minutes.
FIG. 9C is a scanning electron microscope photograph showing the state of the wet-spun fibers 4 after being fibrillated for five minutes.

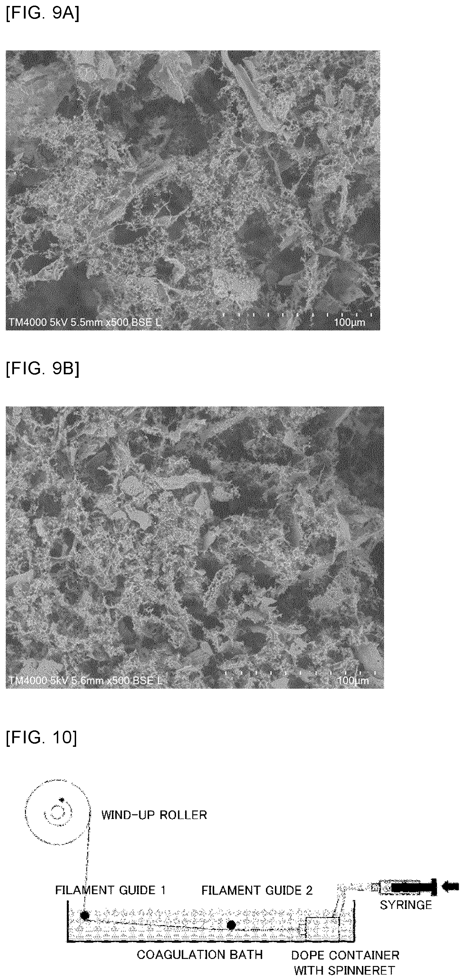

FIG. 9B is a scanning electron microscope photograph showing the state of the wet-spun fibers 4 after being fibrillated for 60 minutes.
FIG. 10 is a schematic diagram of the spinning apparatus used in the examples.

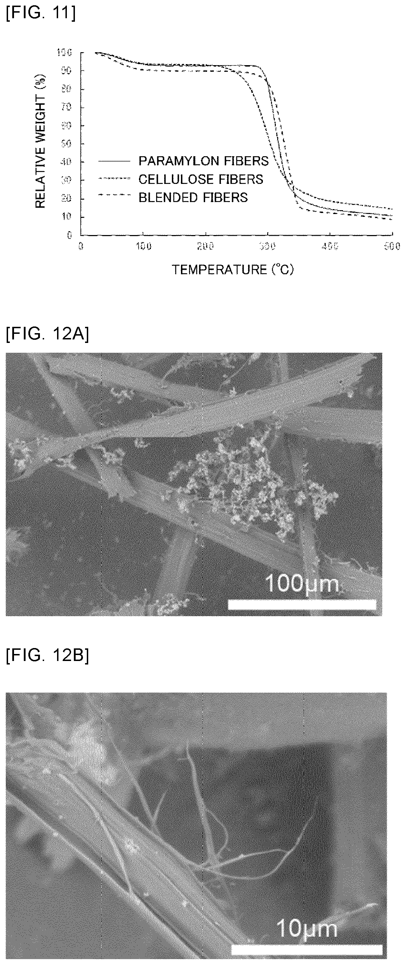

FIG. 11 shows a thermogram of the wet-spun fibers in the examples and comparative examples.
FIG. 12A is a scanning electron microscope photograph showing the state of the cellulose fibers of Comparative Example 1 after being fibrillated for 20 minutes.
FIG. 12B is an enlarged view of FIG. 12A.

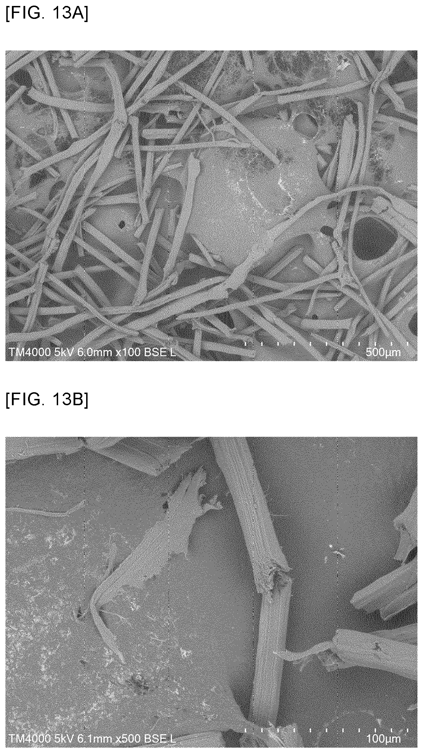

FIG. 13A is a scanning electron microscope photograph showing the state of the mixed fibers of Comparative Example 2 after being fibrillated in water.
FIG. 13B is an enlarged view of FIG. 13A.

### DESCRIPTION OF EMBODIMENTS

Hereinafter, embodiments of the present invention will be described in detail. The present invention is not limited to the following embodiments and can be implemented with modifications added, as appropriate, as long as the effects of the present invention are not inhibited.

Herein, "-" with regard to numerical ranges indicates "... or more and ... or less".

Herein, "wet-spun fibers" refers to fibers spun by a wet method.

Herein, "monofilament" refers to a single fiber that is obtained by being extruded from a nozzle.

The "fiber diameter" of the fibers according to the first to fourth aspects herein refers to the thickness (diameter) of a single monofilament.

Herein, "room temperature" means "18-28°C".

### [Wet-spun fibers]

A first aspect of the present invention is wet-spun fibers containing only β-1,3-glucan, represented by the following Chemical Formula (1), as a constituent molecule.

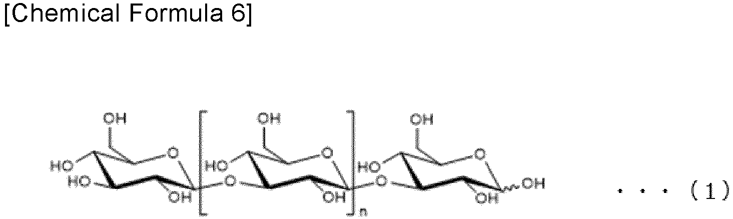

In Chemical Formula (1), n represents an integer from 60 to 3,000. n is preferably 500 to 2,800, more preferably 700 to 2,500, even more preferably 800 to 2,200, and particularly preferably 1,000 to 2,000.

The wet-spun fibers containing only β-1,3-glucan, represented by the above Chemical Formula (1), (hereinafter referred to simply as "β-1,3-glucan") as a constituent molecule are novel fibers that were previously unknown.

"β-1,3-glucan" refers to a polysaccharide having a structure in which glucose is linked by β-1,3 bonds. That is, β-1,3-glucan has a structure in which the 1-position in a glucose and the 3-position in a different glucose form a β-1,3-glucoside bond. The expression "β-1,3-glucan" includes β-1,3-glucan and derivatives thereof. β-1,3-glucan is mainly produced by algae, bacteria, and the like.

Examples of the derivatives of β-1,3-glucan include laminaran (a linear polysaccharide containing β-1,3 and β-1,6 bonds), schizophyllan (a branched polysaccharide containing β-1,3 and β-1,6 bonds), pachyman (a polysaccharide with a main chain including β-1,3 bonds and that has three to six side chains per one molecule), lentinan (a polysaccharide with a main chain including β-1,3 bonds and that has two side chains per five glucose units of the main chain), curdlan (a polysaccharide that is nearly linear and that has one side chain per approximately 200 glucose units), and the like.

β-1,3-glucan constituting the wet-spun fibers according to the first aspect preferably contains at least one paramylon selected from purified paramylon and regenerated paramylon. Note that from the perspective of easier processing and easier preparation, it is preferable to contain purified paramylon.

As mentioned above, paramylon is an energy storage substance synthesized and stored by Euglena, a type of microalgae, and exists as an oval-shaped and micro-sized granule (paramylon granule) within Euglena cells. Paramylon is β-1,3-glucan represented by the above Chemical Formula (1), wherein n is preferably between 1,500 and 2,000.

Herein, "regenerated paramylon" refers to paramylon that has first been chemically modified and thereafter regenerated to its original molecular structure. Wet-spun fibers containing regenerated paramylon can be prepared, for example, by a method (I) described below. In addition, "purified paramylon" refers to paramylon obtained by first dissolving paramylon granules in a good solvent, and thereafter re-agglomerating the paramylon granules by putting them in a poor solvent. The wet-spun fibers containing purified paramylon can be prepared by wet spinning a dope solution containing paramylon, for example, by a method (II) described below. Herein, "good solvent" refers to a solvent that dissolves β-1,3-glucan. Moreover, "poor solvent" refers to a solvent that does not dissolve β-1,3-glucan.

In the first aspect, examples of the poor solvent for "regenerated paramylon" include an inorganic acid aqueous solution such as a sulfuric acid solution, hydrochloric acid, a phosphoric acid solution, and a nitric acid solution; an aqueous solution of organic acid such as acetic acid; and the like. The foregoing may be used alone or as a combination of two or more. Moreover, the above-mentioned inorganic acid aqueous solution may include an inorganic salt such as sodium sulfate and zinc sulfate.

Examples of the poor solvent for "purified paramylon" include a dimethyl sulfoxide (DMSO) aqueous solution; an alcohol or an aqueous solution thereof; a halogen-based solvent such as chloroform, dichloromethane, carbon tetrachloride, and 1 ,2-dichloroethane; a non-polar solvent such as benzene and hexane; an aprotic solvent such as acetone, tetrahydrofuran, ethyl acetate, or an aqueous solution thereof; and the like. The foregoing may be used alone or as a combination of two or more. Note that when a mixed solvent is used as a poor solvent, solvents of the same group but of different types may be combined. For example, a mixed solvent of ethanol and methanol may be used. Moreover, the above-mentioned solution may include an inorganic salt such as sodium sulfate and zinc sulfate.

In one aspect, β-1,3-glucan constituting the wet-spun fibers according to the first aspect may be a mixture of at least one paramylon selected from purified paramylon and regenerated paramylon and β-1,3-glucan other than the above-mentioned paramylon. The above-mentioned mixture may, for example, contain β-1,3-glucan produced by algae, bacteria, and the like. other than Euglena, or may contain a derivative of the above-mentioned β-1,3-glucan.

The wet-spun fibers according to the first aspect may be fibers with a high moisture absorption rate. Rayon with cellulose as the raw material (hereinafter sometimes referred to as "cellulose fibers") generally has a moisture absorption rate of approximately 11%. The wet-spun fibers according to the first aspect may have a moisture absorption rate that exceeds 11%. Such a high moisture absorption rate is readily achieved with wet-spun fibers containing regenerated paramylon as a constituent molecule. In one preferred aspect, the moisture absorption rate of the wet-spun fibers containing regenerated paramylon as a constituent molecule preferably exceeds 11% at a temperature of 20°C and a humidity of 65%, and is more preferably 13% or more, and particularly preferably 16% or more. Among known regenerated cellulose fibers, purified cellulose fibers, and natural fibers, wool exhibits the highest moisture absorption rate, but the wet-spun fibers containing the above-mentioned regenerated paramylon as a constituent molecule more preferably have a moisture absorption rate equivalent to that of wool. Note that the above-mentioned moisture absorption rate refers to a value measured by a method corresponding to the standards of the standard moisture regain in JIS 0105:2020.

Moreover, the moisture absorption rate of the wet-spun fibers containing regenerated paramylon as a constituent molecule preferably exceeds 27% at a temperature of 20°C and a humidity of 97%, and is more preferably 30% or more. Cellulose fibers measured under the same conditions have a moisture absorption rate of approximately 27%. As mentioned above, the wet-spun fibers containing regenerated paramylon as a constituent molecule can readily achieve a high moisture absorption rate. The wet-spun fibers having such a high moisture absorption rate are also promising as moisture-absorbing and heat-generating fibers (fibers that emit heat by converting the energy of absorbed water molecules into thermal energy). Moreover, since the wet-spun fibers according to the first aspect can also be continuous fibers, unlike spun yarns made of short fibers such as wool, the area of contact with the skin is increased. Due thereto, the wet-spun fibers are cool to the touch in the summer and are also useful as refreshing cool fibers since the high moisture absorption rate thereof can reduce steaminess when being worn.

The wet-spun fibers according to the first aspect preferably contain only purified paramylon as a constituent molecule from the perspective of easier production process and easier preparation. Moreover, the wet-spun fibers according to the first aspect may have a high elongation. Wet-spun fibers having a high elongation are readily achieved with wet-spun fibers containing purified paramylon as a constituent molecule. In one preferred aspect, the wet-spun fibers containing purified paramylon as a constituent molecule may have an elongation of 2% or more or 10% or more. The wet-spun fibers having such an elongation are also promising as, for example, fibers for medical sheets for which elasticity, biocompatibility, and mechanical strength are demanded.

The wet-spun fibers according to the first aspect are fibers with a natural ingredient ratio of 100%, and therefore can be said to be an advantageous material with respect to carbon offset. The wet-spun fibers are also considered to have biodegradability. Due thereto, they have small environmental impact.

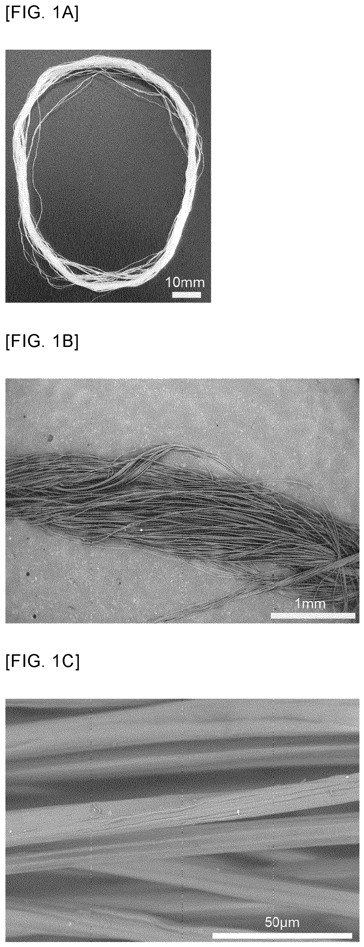

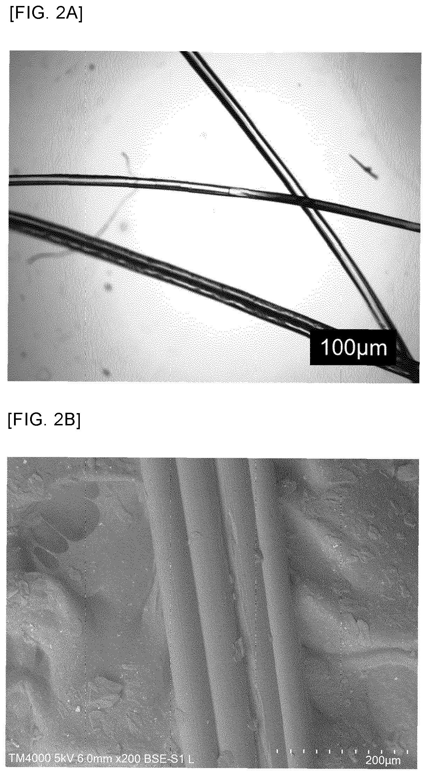

FIGS. 1 to 4 are microscope photographs showing one embodiment of the wet-spun fibers according to the first aspect. FIGS. 1A to 1C show the wet-spun fibers 1 obtained by a method (I) described below, and FIGS. 2 to 4 show the wet-spun fibers 2 to 4 obtained by a method (II) described below.

The wet-spun fibers according to the first aspect have a plurality of lines formed on the surface thereof along the length direction of the fibers, as shown, for example, in FIG. 1C. These lines are bonding planes between the sub-micron fibrils constituting the wet-spun fibers. As such, the wet-spun fibers according to the first aspect may constitute monofilaments formed from a plurality of sub-micron fibrils bundled together.

The wet-spun fiber in FIG. 1C constitutes a monofilament, with a fiber diameter of approximately 20 µm, formed by sub-micron fibrils, with an average fiber diameter of 1 µm or less, being gathered together. Note that the fiber diameter of the monofilament of the wet-spun fiber is arbitrary, and a monofilament having a desired fiber diameter can be obtained by changing the diameter of a nozzle. Note that the wet-spun fibers in FIG. 1C have a relatively smooth surface, even though the monofilaments are constituted by the aggregation of submicron fibrils. Due thereto, the wet-spun fibers according to the first aspect are expected to be applied to, aside from linings for fabric products such as clothing, moisture-absorbing and heat-generating fibers, as described above. Details of the sub-micron fibrils are discussed below. Note that FIG. 1C shows a monofilament of a wet-spun fiber, but the wet-spun fibers according to the first aspect also include filaments that are formed into a single yarn (multifilament) by bundling a plurality of monofilaments that are spun simultaneously from a large number of extrusion ports provided on a spinning nozzle.

### [Production method of wet-spun fibers]

A second aspect of the present invention is a production method of the wet-spun fibers according to the first aspect.

The second aspect includes preparing spun fibers from a β-1,3-glucan raw material, represented by the following Chemical Formula (1), by the method (I) in which viscose is prepared from the β-1,3-glucan raw material, or the method (II) in which the β-1,3 -glucan raw material is dissolved in a good solvent (II).

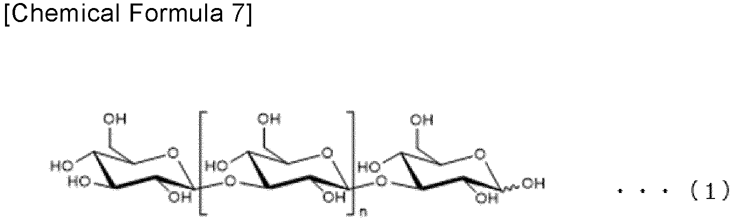

In Chemical Formula (1), n represents an integer from 60 to 3,000. n is preferably 500 to 2,800, more preferably 700 to 2,500, even more preferably 800 to 2,200, and particularly preferably 1,000 to 2,000. Hereinafter, the method (I) and method (II) will be described in detail.

### <Method (I)>

The method (I) is a method in which viscose is prepared from a β-1,3-glucan raw material, represented by the above Chemical Formula (1), (hereinafter referred to as the "β-1,3-glucan raw material") to prepare spun fibers from the β-1,3-glucan raw material. The method (I) preferably includes (i) preparing viscose by introducing xanthates group to the β-1,3-glucan raw material in an alkali aqueous solution, and (ii) obtaining spun fibers of β-1,3-glucan by extruding the viscose through a nozzle into a coagulation liquid and removing the xanthate groups. In addition, the above-mentioned β-1,3-glucan raw material preferably contains paramylon, and more preferably contains only paramylon.

As mentioned above, paramylon granules do not dissolve in water or common organic solvents, and therefore using paramylon granules as a raw material for the wet spinning method is very difficult. The present inventors discovered that chemically modifying the β-1,3-glucan raw material, which may be paramylon, in an aqueous alkaline solution to prepare viscose, and extruding the viscose into a coagulation liquid enables wet-spun fibers containing only β-1,3-glucan as a constituent molecule to be obtained while regenerating the chemically modified β-1,3-glucan to its original structure.

### (Step (i))

Step (i) is a step of preparing viscose by introducing xanthate groups to a β-1,3-glucan raw material in an alkali aqueous solution. Examples of alkaline aqueous solutions include sodium hydroxide aqueous solutions, potassium hydroxide aqueous solutions, and the like. Among these, from the perspective of ease of handling, sodium hydroxide aqueous solutions are preferable.

From the perspective of ease of handling, the concentration of the sodium hydroxide aqueous solution is preferably 0.5-2.0 mol/L and more preferably 0.8-1.2 mol/L.

In step (i), the β-1,3-glucan raw material is preferably reacted with carbon bisulfide in the alkali aqueous solution to introduce the xanthate groups to the β-1,3-glucan raw material. The reaction temperature is preferably 35-45°C and more preferably 38-42°C. Moreover, the reaction temperature is preferably 2-6 hours and more preferably 3-4 hours. In addition, from the perspective of ease of regeneration in the coagulated bath, the xanthate groups have a substitution degree of preferably 0.5-1.2 per one glucose residue.

Note that the β-1,3-glucan, containing xanthate groups prepared in step (i) preferably has a structure represented by the following Chemical Formula (2).

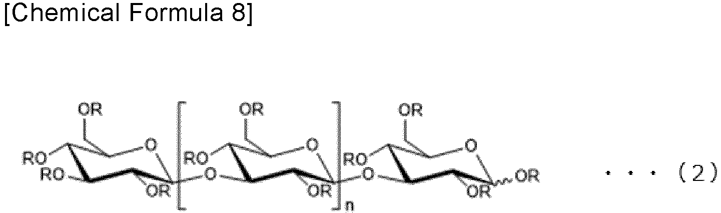

In Chemical Formula (2), R represents hydrogen or C(=S) S⁻Na⁺, at least one R is C(=S) S⁻Na⁺, and n represents an integer from 60 to 3,000.

The xanthate groups have a substitution degree of preferably 0.5-1.2 and more preferably 0.8-1.0 per one glucose residue.

Moreover, in Chemical Formula (2), n is preferably 500 to 2,800, more preferably 700 to 2,500, even more preferably 800 to 2,200, and particularly preferably 1,000 to 2,000.

The above-mentioned β-1,3-glucan that contains xanthate groups can also be, for example, stored in a state that is dissolved in an alkali aqueous solution (viscose) and used as a compound (raw material for production) for producing the wet-spun fibers according to the first aspect.

### (Step (ii))

Step (ii) is a step of obtaining spun fibers of β-1,3-glucan by extruding the viscose prepared in step (i) through a nozzle into a coagulation liquid and removing the xanthate groups.

The coagulation liquid has a function of removing the xanthate groups from the β-1,3-glucan that contains xanthate groups and coagulating the regenerated β-1,3-glucan. Examples of such coagulation liquids include hydrochloric acid, sulfuric acid, and the like. Among these, from the perspective of ease of removing xanthates, sulfuric acid is preferred.

The sulfuric acid has a concentration of preferably 1-3 mol/L and more preferably 1.8-2.0 mol/L.

After step (ii), it is preferable to include a further purifying step. The spun fibers prepared through step (ii) tend to swell in water or aqueous solutions in a wet state. Due thereto, the above-mentioned purifying step preferably includes dehydrating the spun fibers by immersing the spun fibers in alcohol. Examples of the alcohol include alcohols with a carbon number of 1 to 5. Among these, methanol, ethanol, isopropyl alcohol, and n-propyl alcohol are preferred, and methanol is particularly preferred. Moreover, the above-mentioned dehydrating step is preferably performed for 0.5-3 hours.

The wet-spun fibers according to the first aspect can be obtained by drying the spun fibers after being purified. Note that the drying conditions are not particularly limited. For example, drying can be performed for 1-10 hours at 50-70°C.

As the second aspect, when the method (I) is employed, the obtained wet-spun fibers contain only "regenerated β-1,3-glucan" as a constituent molecule. That is, when paramylon is used as a β-1,3-glucan raw material, wet-spun fibers including regenerated paramylon can be obtained. Note that whether or not β-1,3-glucan is regenerated by removing the xanthate groups from the xanthate group-containing β-1,3-glucan can be confirmed by measuring ¹³C NMR and FT-IR of the obtained wet-spun fibers. Specific methods thereof are described below.

The method (i) enables, for example, the wet-spun fibers 1 as shown in FIGS. 1A to 1C to be obtained. FIG. 1A is a microscope photograph showing an overall view of the obtained wet-spun fibers 1, and FIGS. 1B and 1C are enlarged images taken by a scanning electron microscope of the wet-spun fibers 1.

As mentioned above, the method (I) is a method for producing the wet-spun fibers according to the first aspect by a viscose method. The viscose method is also known, for example, as a production method for the above-mentioned cellulose fibers.

When producing rayon with the viscose method, it is necessary to undergo the following steps: (1) preparing alkali cellulose by immersing a cellulose raw material in a high concentration (more than 6 mol/L) sodium hydroxide aqueous solution for 18 hours and swelling the cellulose; (2) introducing xanthate groups by removing moisture to extract the alkali cellulose and reacting the alkali cellulose with carbon bisulfide; (3) preparing viscose by dissolving the cellulose xanthate again in the aqueous sodium hydroxide solution; and (4) obtaining regenerated cellulose spun fibers by extruding the viscose into dilute sulfuric acid and removing the xanthate groups. The present inventors discovered that the viscose method using a high concentration sodium hydroxide aqueous solution cannot prepare xanthate group-containing β-1,3-glucan. The method (I) is a method of preparing xanthate group-containing β-1,3-glucan by dissolving β-1,3-glucan in a relatively low-concentration alkali aqueous solution and directly adding carbon disulfide to the alkali aqueous solution. The method (I) enables wet-spun fibers to be prepared in fewer steps than the conventional viscose method.

### <Method (II)>

Next, the method for producing the wet-spun fibers according to the first aspect by the method (II) is described. The method (II) is a method in which wet-spun fibers are prepared by dissolving a β-1,3-glucan raw material in a good solvent.

Examples of a good solvent include at least one solvent selected from an aprotic solvent, an alkali aqueous solution, an ionic liquid, and a deep eutectic solvent. The aprotic solvent, alkali aqueous solution, ionic liquid, and deep eutectic solvent are not particularly limited as long as β-1,3-glucan can be dissolved in them, and examples thereof are described below.

Examples of the aprotic solvent includes a single solvent such as N,N-dimethylacetamide, N,N-dimethylformamide (DMF), dimethylsulfoxide (DMSO), N-methylmorpholine-N-oxide (NMMO), or lithium chloride; a mixed solvent containing two or more of the above-mentioned solvents; a mixed solvent of one or more of the above-mentioned solvents and a protic solvent (methanol, and the like); a mixed solvent of one or more of the above-mentioned solvents and water; and the like.

One example of the alkali aqueous solution is a cuprammonium solution.

Examples of the ionic liquid include 1-ethyl-3-methylimidazolium acetate, N,N-diethyl-N-(2-methoxyethyl)-N-methylammonium, 2-methoxyacetate, and the like. These ionic liquids may be used alone or as a combination of two or more.

Examples of the deep eutectic solvent include a mixture of choline chloride and zinc chloride, and the like.

The good solvent used in the method (II) preferably includes an aprotic solvent from the perspective of ease of recovering the solvent. That is, the method (II) preferably includes obtaining spun fibers of β-1,3-glucan by extruding a dope solution, in which a β-1,3-glucan raw material is dissolved in a good solvent including an aprotic solvent, through a nozzle into a coagulation liquid. In addition, the aprotic solvent preferably includes at least one solvent selected from DMSO and NMMO and more preferably includes DMSO.

The percentage of β-1,3-glucan in the dope solution is not particularly limited. From the perspective of the viscosity of a dope suitable for spinning, the percentage of β-1,3-glucan in the dope solution may be 5-12% by mass or 7-10% by mass.

Moreover, an example of the coagulation solution used to obtain purified paramylon in the coagulation step includes the "poor solvent for purified paramylon" mentioned above. In one aspect, the above-mentioned coagulation solution preferably contains an aprotic solvent or aqueous solution thereof, a halogen-based solvent, a non-polar solvent, or an alcohol with a carbon number of 1 to 5. From the perspective of reusing the coagulation solution, it is preferable to include an alcohol with a carbon number of 1 to 5, and it is more preferable to include ethanol. As the coagulation solution, a mixed solvent of two or more solvents may be used. Note that an aqueous solution of an aprotic solvent, when used as the coagulation solution, can be used by adjusting, as appropriate, the percentage of the aprotic solvent in the aqueous solution so as to be in a range of 10% or more.

The method (II) preferably also includes a purifying step. Similar to the method (I), the above-mentioned purifying step preferably includes a step of dehydrating the spun fibers by immersing the spun fibers in alcohol. As the alcohol, for example, an alcohol with a carbon number of 1 to 3 is preferable. In addition, the same alcohol as the coagulation solution may be used. The dehydrating step is preferably performed for 3-24 hours at a condition of 18-28°C.

By drying the spun fibers after being purified, the wet-spun fibers according to the first aspect, that is, wet-spun fibers containing only β-1,3-glucan as a constituent molecule can be obtained. Note that the drying conditions are not particularly limited. For example, the spun fibers can be dried under reduced pressure for 1-6 hours at 80-100°C.

As the second aspect, when employing the method (II), the obtained wet-spun fibers contain only "purified β-1,3-glucan" as a constituent molecule. That is, when paramylon is used as the β-1,3-glucan raw material, wet-spun fibers including purified paramylon can be obtained.

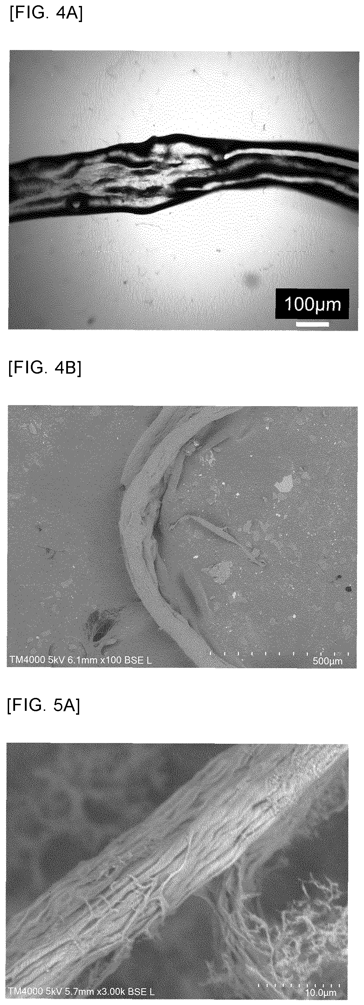

The method (II) enables, for example, the wet-spun fibers 2-4 as shown in FIGS. 2A to 4B to be prepared. FIGS. 2A to 3B are microscope photographs of the wet-spun fibers 2 and 3 prepared with DMSO as the good solvent. Moreover, FIGS. 4A and 4B are microscope photographs of the wet-spun fibers 4 prepared with sodium hydroxide solution as the good solvent.

When the wet-spun fibers according to the first aspect are fibrillated, for example, by the method described below, small fibers (fibrils) are exposed from the fiber surface (hereinafter, the fiber surface with fibrils exposed therefrom is described as a "peach skin"). When the fibers are further fibrillated, not only are the fiber surfaces fibrillated, but the inside of the fibers is also fibrillated, thereby forming porous fibers. When the fibrillating treatment is subsequently continued, all of the monofilaments are also fibrillated, leaving only sub-micron fibrils. As such, the wet-spun fibers according to the first aspect are readily changed by the fibrillating process into fibers having a peach skin on the fiber surface, porous fibers, and sub-micron fibrils. Hereinafter, the fibers and fibrils obtained by fibrillating the wet-spun fibers are described in sequence.

### [Wet-spun fibers having peach skin on fiber surface]

When the wet-spun fibers according to the first aspect are fibrillated such that the fiber surface is nap-raised, fibrils are nap-raised from the surface of the monofilaments, thereby forming peach skins. That is, a third aspect of the present invention is wet-spun fibers having a peach skin on the fiber surface. The wet-spun fibers having the above-mentioned peach skin can be prepared, for example, by fibrillating only the fiber surface of the wet-spun fibers with a fibrillation treatment, and the like. The fibers according to the third aspect refer to, for example, the fiber in FIG. 5A. FIG. 5A is a scanning electron microscope photograph showing one aspect of a monofilament in the wet-spun fiber having a peach skin. As shown in FIG. 5A, a peach skin is formed on the monofilament surface.

In the fibers according to the third aspect, the fibrils forming the peach skin may be sub-micron fibrils, microfibrils, or fibrils with a fiber diameter of 1 µm or more.

The fibers according to the third aspect are preferably prepared by a method of fibrillating wet-spun fibers such that the fibrils are nap-raised from the surface of the monofilaments. Specifically, the fibers may be prepared by immersing the wet-spun fibers in water, and thereafter fibrillating the wet-spun fibers for 1-60 minutes, preferably 1-20 minutes, and more preferably 5-20 minutes, by a mechanical shearing treatment such as a homogenization treatment, thereby nap-raising the fiber surface. The conditions of the homogenization treatment are not particularly limited as long as the wet-spun fibers can be applied with a shear force of an extent that nap-raises the fiber surface.

### <Porous fibers>

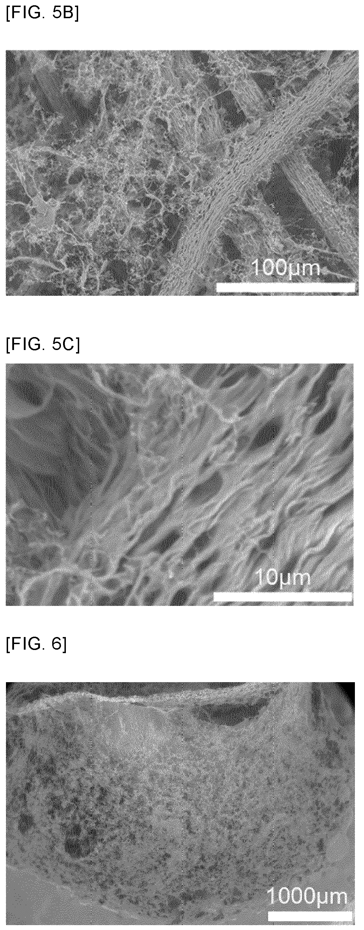

When the wet-spun fibers according to the first aspect or the wet-spun fibers according to the third aspect are further fibrillated, for example, by the method described below, the inside of the monofilaments is also fibrillated to form a plurality of pores on the surface and inside of the monofilaments. A fourth aspect of the present invention is porous fibers having a plurality of pores on the surface and inside of the monofilaments. The "porous fibers" refers to fibers having a plurality of pores on the surface and inside the monofilaments and, for example, the fibers in the scanning electron microscope photographs in FIG. 5B and 5C.

FIG. 5B is a scanning electron microscope photograph in which the portion of the fiber (porous fiber) in FIG. 5A has been further enlarged. As shown in FIG. 5B, porous fibers have a plurality of pores on the surface of the monofilaments thereof, but the fiber structure (that is, the structure that is long and elongated in the fiber length direction) is maintained. In FIG. 5B, the fibrils on the left side of the porous fiber include sub-micron-sized fibrils (sub-micron fibrils). Note that the sub-micron fibrils are discussed below.

FIG. 5C is a scanning electron microscope photograph in which the porous fiber surface of FIG. 5B has been further enlarged. Sub-micron fibrils that constitute a monofilament extend in a wavy pattern from the lower left to the upper right of FIG. 5C. It can be understood that annular pores are formed between the sub-micron fibrils. The pores are stretched in the length direction of the monofilament and have a substantially oval shape. The pores that appear as dark shadows in FIG. 5C indicate pores that are deeply formed in the direction of the thickness of the monofilament (inside the fiber). That is, it can be understood that the porous fibers according to the fourth aspect have a plurality of pores formed not only on the surface of the monofilaments, but also in the inside of the monofilaments. The porous fibers are in a state where the sub-micron fibrils that are tightly adhered to each other to constitute a single monofilament are partially peeled off in the length direction of the monofilament, thereby forming gaps between the sub-micron fibrils. Such porous fibers are expected to be applied, for example, to moisture-absorbing and heat-generating fibers.

In FIG. 5C, fine fibrous materials are further attached to the surface of the monofilament, and this is considered to be the above-mentioned peach skin (nap-raised fabric). That is, the porous fibers according to the fourth aspect may have a peach skin on the fiber surface.

### [Production method of porous fibers]

The porous fibers according to the fourth aspect can be prepared by a method including fibrillating the wet-spun fibers according to the first aspect or the fibers according to the third aspect. Specifically, a method of immersing the wet-spun fibers according to the first aspect and/or the third aspect in water, and thereafter fibrillating the wet-spun fibers for 5 minutes or more and 60 minutes or less, preferably 5-20 minutes, by a mechanical shearing treatment such as a homogenization treatment, thereby fibrillating the wet-spun fibers to generate pores (small pores) on the surface and inside of the fibers is preferable. In one preferred aspect, the method may include performing a homogenization treatment on the monofilament of at least one fiber selected from the fibers of the first and third aspects in water for 5 minutes or more. Note that the conditions of the homogenization treatment are not particularly limited as long as the conditions are within the range in which the wet-spun fibers can be fibrillated and, for example, can be applied with a shear force that creates a plurality of pores on the surface and inside of the fibers, as shown in FIGS. 5B and 5C. In addition, the time of the fibrillation treatment can also be adjusted according to the conditions of the homogenization treatment.

### [Sub-micron fibrils]

A fifth aspect of the present invention is sub-micron fibrils containing only β-1,3-glucan, represented by the following Chemical Formula (1), as a constituent molecule.

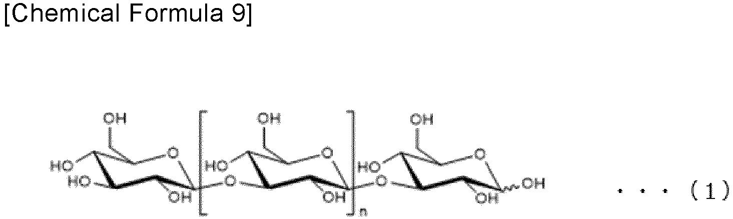

In Chemical Formula (1), n represents an integer from 60 to 3,000. n is preferably 500 to 2,800, more preferably 700 to 2,500, even more preferably 800 to 2,200, and particularly preferably 1,000 to 2,000.

When the fibers, preferably monofilaments, according to the first to fourth aspects are further fibrillated, all of the monofilaments are fibrillated to obtain fibrils (sub-micron fibrils) having an average fiber diameter of less than 1 µm.

Herein, "sub-micron fibrils" refers to fibrils of which a single fibril has an average fiber diameter (average thickness) of more than 100 nm and less than 1,000 nm. Note that sub-micron fibrils according to the fifth aspect do not include those in which multiple sub-micron fibrils are bundled together and the fiber structure of the monofilament is maintained. Those that have the fiber structure of the monofilament maintained are defined as the "fibers" of any of the first to four aspects. That is, the sub-micron fibrils according to the fifth aspect refer to those in a state where the sub-micron fibrils are fibrillated individually. Note that the average fiber diameter of the fibrils can be measured by measuring three locations on any 20 fibrils observed with a scanning electron microscope and calculating the average value thereof.

The monofilaments of the wet-spun fibers according to the first aspect are preferably aggregates of the sub-micron fibrils according to the fifth aspect. Similarly, the monofilaments of the wet-spun fibers according to the third aspect and the porous fibers according to the fourth aspect are preferably aggregates of sub-micron fibrils. Note that "the monofilaments are aggregates of sub-micron fibrils" refers to a structure in which the sub-micron fibrils are arranged in the direction of the length of the monofilament and/or the thickness (fiber diameter) of the monofilament to constitute a monofilament and in which the sub-micron fibrils are fibrillated to each individual sub-micron fibril by the fibrillation treatment described below. Note that the fibrils generated when fibrillating the above-mentioned aggregates may include, aside from sub-micron fibrils, sub-micron-sized fibrils and fibrils having a fiber diameter of 1 µm or more.

β-1,3-glucan represented by the above-mentioned Chemical Formula (1) preferably contains at least one paramylon selected from purified paramylon and regenerated paramylon. Moreover, in one aspect, the β-1,3-glucan may be a mixture of at least one paramylon selected from purified paramylon and regenerated paramylon and β-1,3-glucan other than the above-mentioned paramylon. The mixture may, for example, contain β-1,3-glucan produced by algae, bacteria, and the like other than Euglena, or may contain derivatives of the above-mentioned β-1,3-glucan. From the perspective of ease of availability and ease of production and purification, the sub-micron fibrils according to the third aspect preferably contain only at least one paramylon selected from purified paramylon and regenerated paramylon as the constituent molecule. Note that from the perspective of ease of processing and ease of preparation, it is preferable to contain only purified paramylon as the constituent molecule. From the perspective of ease of obtaining sub-micron fibrils having a high moisture absorption rate, it is preferable to contain only regenerated paramylon as a constituent molecule.

The average fiber diameter of the sub-micron fibrils is more than 100 nm and less than 1,000 nm, preferably 200-800 nm, and more preferably 400-600 nm. Due to having such an average fiber diameter, the sub-micron fibrils can be suitably utilized as fillers, separation membrane materials, and the like.

The physical properties of the sub-micron fibrils also change depending on the length of the sub-micron fibrils, the raw material of the sub-micron fibrils (purified paramylon or regenerated paramylon), and the like. In one aspect, the sub-micron fibrils containing regenerated paramylon as a constituent molecule may have a higher moisture absorption rate than that of cellulose fibers. In addition, the sub-micron fibrils containing purified paramylon as the constituent molecule may have higher mechanical strength than that of cellulose fibers.

### [Production method of sub-micron fibrils]

A sixth aspect of the present invention is a production method of the sub-micron fibrils according to the fifth aspect.

The sixth aspect includes fibrillating the wet-spun fibers according to the first aspect in water. Note that the sub-micron fibrils according to the fifth aspect may be prepared from the fibers according to the third or fourth aspect or prepared from a mixed fiber of these fibers. That is, the production method according to the sixth aspect includes fibrillating at least one fiber selected from the fibers of the first, third, and fourth aspects in water. In addition, in one preferred aspect, the production method may include mechanically fibrillating a monofilament of at least one fiber selected from the fibers according to the first, third, and fourth aspects in water.

The fibers according to the first, third, and fourth aspects may be used as a precursor for the sub-micron fibrils according to the fifth aspect.

In the sixth aspect, too, the fibrillation treatment step is preferably a homogenization treatment. Specifically, the sub-micron fibrils according to the fifth aspect can be produced by immersing at least one fiber selected from the fibers of the first, third, and fourth aspects in water, and thereafter performing a mechanical shearing treatment using a homogenizer preferably for 5 minutes or more, and more preferably for 5-20 minutes. Note that the conditions of the homogenization treatment are not particularly limited as long as the conditions are in a range that these fibers can be applied with a shear force that completely fibrillates the above-mentioned fibers (preferably monofilaments). For example, using a homogenizer, the above-mentioned fibers may be fibrillated at a rotational speed of 10,000-15,000 rpm.

Note that the production method according to the sixth aspect may include a step of preparing a raw material solution by immersing the fibers (preferably monofilaments) in water. The solid content concentration of the raw material solution is preferably 1-10% by mass and more preferably 1-3% by mass. Moreover, the immersing water temperature is preferably 15-30°C and more preferably 15-25°C.

The above-mentioned production method enables dispersions of the sub-micron fibrils, in which the sub-micron fibrils of the fifth aspect are dispersed in water, to be prepared. As such, the production method according to the sixth aspect may include a dehydrating step. The dehydrating step may be a step of (1) centrifuging a dispersion to separate sub-micron fibrils, and (2) heating and drying the separated sub-micron fibrils under reduced pressure for 3-8 hours at 60 to 80°C to obtain the dehydrated sub-micron fibrils.

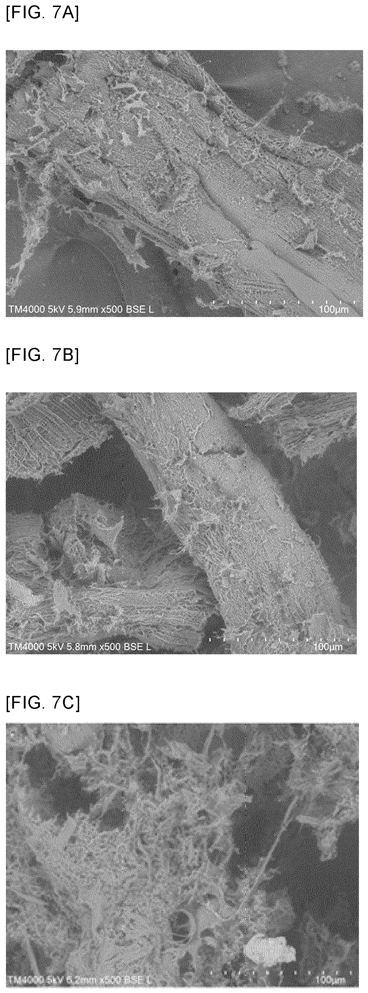

FIGS. 6, 7C, 8C, 9A, and 9B are scanning electron microscope photographs of sub-micron fibrils prepared by the production method according to the sixth aspect. FIG. 6 is a scanning electron microscope photograph of a sub-micron fibril obtained by a homogenization treatment of the wet-spun fibers 1 prepared by the method (I). FIGS. 7C to 9B are scanning electron microscope photographs of sub-micron fibrils obtained by a homogenization treatment of the wet-spun fibers 2-4 prepared by the method (II). As shown in the above drawings, it can be understood that the sub-micron fibrils can be prepared even from the wet-spun fibers prepared by either the method (I) or (II) by mechanically fibrillating the fibers.

As described above, the method of preparing sub-micron fibrils by mechanically fibrillating the fibers according to the first to fourth aspects was discussed, but the fibers according to the first, third, and fourth aspects are not readily fibrillated in normal use. That is, even if these fibers are applied as fiber raw materials for clothing, bedding, and the like, and are washed or cleaned in the course of their use, these fibers will not be fibrillated within a normal range of use.

In addition, unlike cellulose fibers, the fibers according to the first to fourth aspects can be mechanically fibrillated to prepare sub-micron fibrils. Due thereto, it is also possible to recover the fibers according to the present embodiment in the form of sub-micron fibrils from clothing, bedding, and the like containing these fibers. Moreover, the recovered sub-micron fibrils can be spun by the above the method (II), and the like and reused as wet-spun fibers.

### EXAMPLES

Hereinafter, the present invention will be explained in further detail by indicating examples. However, the present invention should not be construed as being limited by these examples.

### [Example 1: Preparation of Wet-Spun Fiber 1 by method (I)]

### 1. Preparation of viscose

Using paramylon as β-1,3-glucan, an aqueous solution containing β-1,3-glucan that contains xanthate groups (paramylon xanthate) (viscose) was prepared by the following method.

Paramylon, in an amount weighing 499 mg, was dispersed in 10 mL of a 1 mol/L sodium hydroxide aqueous solution and stirred at room temperature for one hour to prepare a sodium salt of paramylon. Next, carbon disulfide, in an amount weighing 1.08 g, was added to the above-mentioned aqueous solution and stirred vigorously for 3.5 hours while being heated in a hot water bath (40°C) to prepare an aqueous solution of paramylon xanthate (viscose) (Reaction Formula (3)).

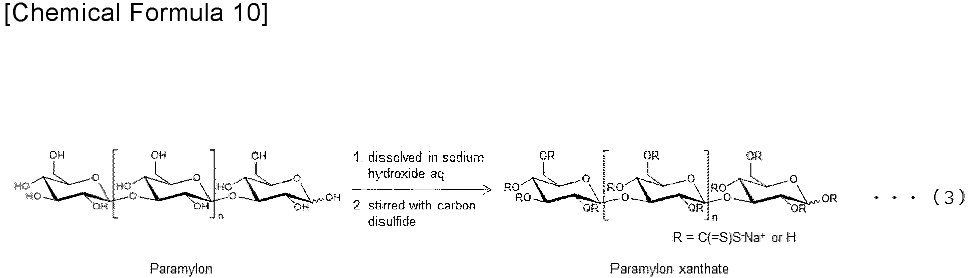

### 2. Spinning

A schematic diagram of the spinning apparatus (wet spinning apparatus manufactured by Nakamura Service Co., Ltd.) is shown in FIG. 10. The viscose prepared in step 1 above was extruded, through a nozzle having 30 holes with a diameter of 0.4 mm (spinneret, 30-hole nozzle), into a coagulated bath (500 mL of 2 mol/L sulfuric acid solution, length 500 mm × width 50 mm × depth 40 mm) using a 10-mL syringe. The extruded gel-like fibers coming into contact with a coagulation solution (dilute sulfuric acid) caused the xanthate groups to be removed, thereby regenerating paramylon (Reaction Formula (4)). The generated fibers were wound up on a wind-up roller (80 mm in diameter) to obtain spun fibers.

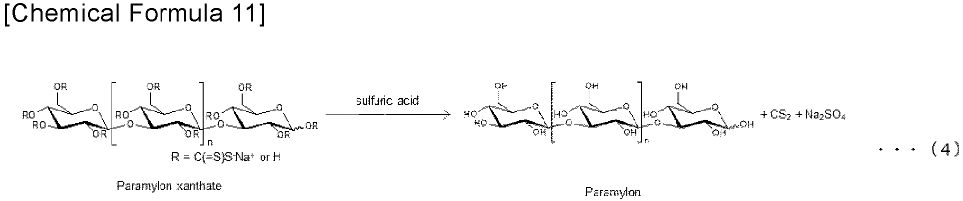

### 3. Purification

The obtained spun fibers were purified by the following method to remove residues containing water.

In the case of cellulose fibers, the cellulose fibers are subjected to a multi-stage step comprising water washing, desulfurization, bleaching, and the like to obtain rayon, which is the ultimate target. In the case of the wet-spun fibers of the present invention, especially in a wet state immediately after spinning has been performed, the wet-spun fibers may readily swell when exposed to water or an aqueous solution, thus reducing their mechanical strength. Therefore, a water washing step was omitted, and the wet-spun fibers were dehydrated with methanol and thereafter air-dried, thereby obtaining the wet-spun fibers 1. Specifically, the spun fibers in a state of being wound onto the roller were immersed in 400 mL of methanol contained in a 500-mL beaker for 30 minutes and thereafter air-dried for 18 hours, thereby obtaining the wet-spun fibers 1. The obtained wet-spun fibers 1 were observed with a microscope and a scanning electron microscope. The results are shown in FIGS. 1A to 1C.

### 4. Analysis

The wet-spun fibers 1 prepared in Example 1 were measured for ¹³C-NMR and FT-IR under the following conditions to confirm whether paramylon (β-1,3-glucan) was regenerated.

### <Analysis with ¹³C-NMR and FT-IR>

The wet-spun fibers 1, in an amount weighing 30 mg, were dispersed in 1.8 mol/L of deuterated sodium hydroxide (NaOD)/deuterium oxide (D₂O) solution (646 mg) and stirred at room temperature for two days. Deuterium oxide, in an amount weighing 550 mg, was added to the obtained homogeneous solution to prepare a sample. The ¹³C-NMR and FT-IR of this sample were measured to confirm that paramylon was regenerated from paramylon xanthate.

¹³C-NMR:(0.9 mol/L NaOD/D₂O), δ(ppm) 106.5(C1), 89.8 (C3), 79.6 (C5), 76.7 (C2), 71.7 (C4), 64.2 (C6)

FT-IR (cm⁻¹): 3305, 2917, 1633, 1367, 1363, 1253, 1175, 1111, 1043, 1032, 888.

With respect to the wet-spun fiber1 in Example 1, the moisture absorption rate, thermal properties, and physical properties of the fiber were measured under the following conditions.

### <Measurement of moisture absorption rate of wet-spun fiber (20°C/65%)>

The moisture absorption rate of the fiber was measured with a measurement method corresponding to JIS 0105:2020.

First, the wet-spun fibers 1, in an amount weighing 500 mg, were dried under reduced pressure for 15 hours at 90°C, and then the fiber weight (A1) after drying was measured. Then, the wet-spun fibers 1 were left in a constant temperature and humidity chamber (temperature of 20°C and relative humidity of 65%) for ten days, and thereafter the fiber weight (A2) was measured. The fiber weight (A1) was subtracted from the fiber weight (A2) to calculate the weight of the water absorbed (A3), and the moisture absorption rate was further calculated from the following formula (a). The results are shown in Table 1. Moisture absorption rate (%) = 100 × (weight of water absorbed (A3) / fuber weight (A1) after drying)

### <Measurement of moisture absorption rate of wet-spun fiber (20°C/97%)>

The wet-spun fibers 1, in an amount weighing 500 mg, were dried under reduced pressure for 15 hours at 90°C, and the fiber weight (A1) after drying was measured. Then, the wet-spun fibers 1 were left in a constant temperature and humidity chamber (temperature of 20°C and relative humidity of 97%) for three days, and thereafter the fiber weight (A2) was measured. The fiber weight (A1) was subtracted from the fiber weight (A2) to calculate the weight of the water absorbed (A3), and the moisture absorption rate was further calculated from the above formula (a). The results are shown in Table 1.

### <Evaluation of thermal properties of wet-spun fiber>

A thermogravimetric analysis of the wet-spun fibers was performed using a thermogravimetric analysis apparatus (manufactured by Rigaku Corporation, product name: Thermo plus EVO2 TG8120).

The wet-spun fibers 1, in an amount weighing 10 mg, were heated from 25°C to 500°C at a rate of 10°C/min under a nitrogen atmosphere to measure the weight change. The decomposition temperature was determined from the intersection of the tangent line of the graph in the temperature range from 100°C to 200°C, where almost no weight change was seen, and the tangent line at the measured minimum temperature of the derivative curve of the graph. A thermogram is shown in FIG. 11 and the decomposition temperature is shown in Table 1. Note that in FIG. 11, "paramylon fibers" refers to the wet-spun fibers 1, "cellulose fibers" refers to the cellulose fibers in Comparative Example 1, and "blended fiber" refers to the mixed fibers in Comparative Example 2.

### <Evaluation of mechanical properties and physical properties of wet-spun fiber>

A tensile test was performed on 20 wet-spun fibers 1 with a universal testing machine (manufactured by A&D Company, Limited, product name: Tensilon RTG-1225). The results are shown in Table 1. Note that the measurement conditions are as follows.
Distance between chucks: 20 mm
Tensile speed: 2 mm/min

### [Preparation of sub-micron fibrils]

The wet-spun fibers 1 in Example 1 were fibrillated to investigate the preparation of sub-micron fibrils.

The wet-spun fibers 1, in an amount weighing 26 mg, were put into 10 mL of Milli-Q water and were fibrillated using an apparatus in which a shaft generator (manufactured by AS ONE Corporation, product name: "HT1008") is attached to a homogenizer (manufactured by AS ONE Corporation, product name: "AHG-160A"). The fibrillation treatment was performed for five minutes, 20 minutes, and 60 minutes each at a rotational speed of 13500 rpm. As a result, wet-spun fibers having a peach skin on the fiber surface were obtained by the fibrillation treatment for five minutes (FIG. 5A). Upon further performing the fibrillation treatment, a mixture of porous fibers (FIGS. 5B and 5C) and sub-micron fibrils having a fiber diameter of about 500 nm were obtained. By performing the fibrillation treatment for 20 minutes or more, all of the wet-spun fibers 1 were fibrillated to obtain sub-micron fibrils having an average fiber diameter of approximately 500 nm (FIG. 6). FIG. 6 is a scanning electron microscope photograph showing the wet-spun fibers 1 after being fibrillated for 20 minutes.

### [Example 2: Preparation of wet-spun fibers 2 by method (II)]

### 1. Preparation of dope solution

Using paramylon as β-1,3-glucan, the wet-spun fibers 2 were prepared by the method (II).

First, paramylon, in an amount weighing 797 mg, was dissolved in 10 mL of DMSO and stirred for six hours at room temperature to prepare a homogeneous dope solution. The content of paramylon in the dope solution was 8% by mass.

### 2. Spinning and Purification

A dope solution was extruded from a 30-hole nozzle using a 10-mL syringe into an ethanol coagulated bath (500 mL ethanol, length 500 mm × width 50 mm × depth 40 mm). The extruded gel-like fibers were wound at a speed of 6 rpm and then subsequently immersed in 400 mL of ethanol contained in a 500-mL beaker, thereby obtaining spun fibers. The spun fibers before air-drying were observed with a bright-field microscope. The results are shown in FIG. 2A. Moreover, the obtained spun fibers were air-dried and thereafter dried under reduced pressure at 100°C for three hours to prepare wet-spun fibers 2. The obtained wet-spun fibers 2 were observed with a scanning electron microscope. The results are shown in FIG. 2B.

With respect to the wet-spun fibers 2, the moisture absorption rate, thermal properties, and physical properties of the fiber were measured under the same conditions as those for the wet-spun fibers 1. The results are shown in Table 1.

In addition, the wet-spun fibers 2 were fibrillated under the same conditions as those for the wet-spun fibers 1 to investigate whether sub-micron fibrils can be prepared. First, by treating the wet-spun fibers 2 for one to three minutes, wet-spun fibers having a peach skin on the fiber surface was obtained. Upon further performing the fibrillation treatment, a mixture of porous fibers, and sub-micron fibrils having a fiber diameter of about 500 nm was obtained. Upon further performing the fibrillation treatment, all of the fibers were fibrillated, leaving only sub-micron fibrils.

FIG. 7A is a scanning electron microscope photograph of the wet-spun fibers 2 after being fibrillated for three minutes, and FIG. 7B is a scanning electron microscope photograph of the wet-spun fibers 2 after being fibrillated for 15 minutes. Moreover, FIG. 7C is a scanning electron microscope photograph of the wet-spun fibers 2 after being fibrillated for 60 minutes. Not all of the wet-spun fibers 2 were fibrillated in the fibrillation treatment for 20 minutes under the same conditions as those for the wet-spun fibers 1, and porous fibers were left. By performing the fibrillation treatment for 60 minutes, as shown in FIG. 7C, all of the fibers were fibrillated into sub-micron fibrils. As shown in FIGS. 7A to 7C, fibrillating the wet-spun fibers 2 enabled fibers having a peach skin, porous fibers, and sub-micron fibrils to be obtained.

### [Example 3: Preparation of wet-spun fibers 3 by method (II)]

### 1. Preparation of dope solution

Using paramylon as β-1,3-glucan, the wet-spun fibers 3 were prepared by the method (II). The wet-spun fibers 3 have a paramylon content of 9% by mass in the dope solution.

Paramylon, in an amount weighing 908 mg, was dissolved in 10 mL of DMSO and stirred for six hours at room temperature to prepare a homogeneous dope solution.

### 2. Spinning and Purification

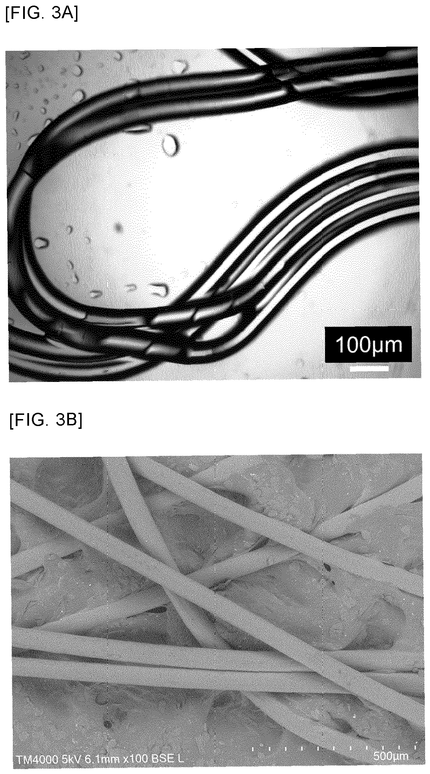

Spinning was performed with the same method as in Example 2 except that the temperature and time of the drying under reduced pressure were changed to 100°C and two hours, respectively, to prepare the wet-spun fibers 3. FIG. 3A shows a bright-field microscope photograph before air-drying, and FIG. 3B shows a scanning electron microscope photograph after drying under reduced pressure.

With respect to the wet-spun fibers 3, the moisture absorption rate, thermal properties, and physical properties of the fiber were measured under the same conditions as those for the wet-spun fibers 1. The results are shown in Table 1.

In addition, the wet-spun fibers 3 were fibrillated under the same conditions as those for the wet-spun fibers 1 to investigate whether sub-micron fibrils can be prepared. First, by treating the wet-spun fibers 3 for one to three minutes, wet-spun fibers having a peach skin on the fiber surface were obtained. Upon further performing the fibrillation treatment, porous fibers were prepared. Upon further performing the fibrillation treatment, all of the fibers were fibrillated, leaving only sub-micron fibrils.

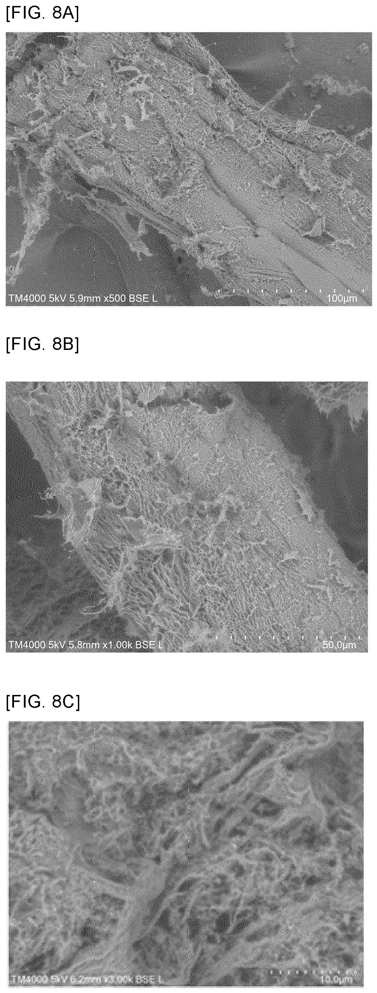

FIG. 8A is a scanning electron microscope photograph of the wet-spun fibers 3 after fibrillating for three minutes, and FIG. 8B is a scanning electron microscope photograph of the wet-spun fibers 3 after fibrillating for 15 minutes. Moreover, FIG. 8C is a scanning electron microscope photograph of the wet-spun fibers 3 after being fibrillated for 60 minutes. As shown in FIGS. 8A to 8C, fibrillating the wet-spun fibers 3 enabled fibers having a peach skin, porous fibers, and sub-micron fibrils to be prepared.

### [Example 4: Preparation of wet-spun fibers 4 by method (II)]

### 1. Preparation of dope solution

Using paramylon as β-1,3-glucan, the wet-spun fibers 4 were prepared by the method (II). With respect to the wet-spun fibers 4, a sodium hydroxide aqueous solution was used as a good solvent.

Paramylon, in an amount weighing 507 mg, was dissolved in 10 mL of sodium hydroxide aqueous solution and stirred for one hour at room temperature (23°C) to prepare a homogeneous dope solution.

### 2. Spinning and Purification

Spinning was performed with the same method as in Example 2 except that the purifying step was changed to immersing the fiber in 200 mL of methanol for 30 minutes to prepare the wet-spun fibers 4. FIG. 4A shows a bright-field microscope photograph before air-drying, and FIG. 4B shows a scanning electron microscope photograph after drying under reduced pressure. Note that the wet-spun fibers 4 were capable of maintaining its fiber structure immediately after spinning, but the strength was weak, and the fiber structure collapsed due to its thermal and physical properties. Due thereto, it was not possible to measure the thermal and physical properties.

The wet-spun fibers 4 were fibrillated under the same conditions as those for the wet-spun fibers 1 to investigate whether sub-micron fibrils can be prepared. The wet-spun fibers 4 were weak in strength, and under the same conditions as those for the wet-spun fibers 1, most of the fibers were fibrillated into sub-micron fibrils with one to five minutes of fibrillating. FIG. 9A is a scanning electron microscope photograph after fibrillation for five minutes, and FIG. 9B is a scanning electron microscope photograph after fibrillation for 60 minutes. Referring to FIG. 9A, it can be understood that most of the fibers have been fibrillated into sub-micron fibrils. Even after continuing the fibrillation treatment for 60 minutes, sub-micron fibrils having the same average fiber diameter as in FIG. 9A are obtained. Note that it is inferred that fibrillating the wet-spun fibers 4 under milder conditions enables preparation of fibers having a peach skin and porous fibers.

### [Comparative Example 1: Preparation of cellulose fibers with cellulose xanthate/sulfuric acid coagulated bath]

### 1. Preparation of cellulose xanthate

A dissolving pulp (manufactured by NIPPON PAPER INDUSTRIES CO., LTD., product name: NSPP-HR), in an amount weighing 499 mg, was immersed in 5.0 mL of 6 mol/L sodium hydroxide solution for 18 hours at room temperature. Next, excess sodium hydroxide solution was removed with a filter paper, thereby obtaining 1.515 g of pulp (alkali cellulose) in a wet state. The alkali cellulose was put in a 20-mL glass container, carbon disulfide, in an amount weighing 503 mg, was added, the lid was closed, and the alkali cellulose was left for 18 hours at room temperature. 10 mL of a 1 mol/L sodium hydroxide solution was added to the glass container and stirred for five hours at room temperature, thereby obtaining viscose containing cellulose xanthate (Reaction Formula (5)).

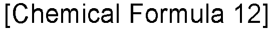

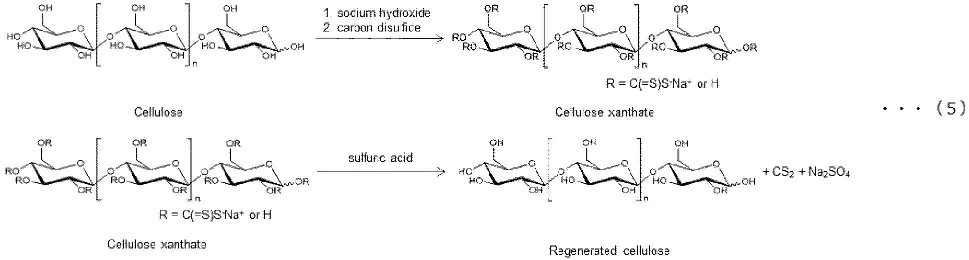

### 2. Spinning

Spinning was performed under the same conditions as in Example 1.

### 3. Purification

Fibers wound on a roll were purified by the following procedure to obtain cellulose fibers. (1) Rinse the fibers with running water for one minute; (2) immerse the fibers in hot water (90°C) for one minute; (3) immerse the fibers in 200 mL of a 0.04 mol/L sodium hydroxide aqueous solution for one minute at room temperature; (4) immerse the fibers in hot water (90°C) for one minute; (5) immerse the fibers in 200 mL of a 0.8% by mass sodium hypochlorite aqueous solution for one minute at room temperature; (6) immerse the fibers in hot water (90°C) for one minute; (7) immerse the fibers in 80 mL of a 0.8% by mass sodium hypochlorite aqueous solution for one minute at room temperature; (8) immerse the fibers in hot water (90°C) for one minute; and (9) air-dry the fibers for 18 hours. FT-IR measurement of the obtained cellulose fibers confirmed that the fibers consist of regenerated cellulose.

FT-IR (cm⁻¹): 3338, 2875, 1635, 1380, 1371, 1312, 1265, 1125, 1020, 891.

With respect to the cellulose fibers, the moisture absorption rate, thermal properties, and physical properties of the fibers were measured under the same conditions as those for the wet-spun fibers 1. The results are shown in Table 1.

In addition, the cellulose fibers were fibrillated under the same conditions as those for the wet-spun fibers 1 to investigate whether sub-micron fibrils can be prepared, but it was not possible to obtain sub-micron fibrils. FIG. 12A is a scanning electron microscope photograph showing the state of the cellulose fibers after being fibrillated for 20 minutes in water. Moreover, FIG. 12B is an enlarged view of FIG. 12A. As shown in FIGS. 12A and 12B, almost no sub-micron fibrils were prepared by only fibrillating the cellulose fibers in water. Moreover, referring to FIG. 12B, it can be understood that fibrils peeled off from the cellulose fiber surface, but no peach skins were formed. In addition, porous fibers with a plurality of pores formed on the surface and inside of the monofilaments were not prepared. That is thought to be because the bonds between fibrils that constitute the monofilaments of the cellulose fibers are strong, and the fibrils could not be freed under the same fibrillation treatment conditions as those for the wet-spun fibers 1.

### [Comparative Example 2: Preparation of mixed fibers including cellulose and β-1,3-glucan with blended xanthate/sulfuric acid coagulated bath]

### 1. Preparation of blended xanthate

Paramylon was used as β-1,3-glucan to prepare paramylon xanthate by the same method as that in Example 1. In addition, cellulose xanthate was prepared using the same method as that in Comparative Example 1. Equal amounts of paramylon xanthate and cellulose xanthate were and stirred for two hours at room temperature to prepare blended xanthate.

### 2. Spinning

Spinning was performed by the same method as that in Example 1 to obtain fibers containing cellulose and paramylon (β-1,3-glucan).

### 3. Purification

Purification was performed by the same method as that in Comparative Example 1 to prepare mixed fibers of cellulose and paramylon. FT-IR measurement of the obtained mixed fibers confirmed that the fibers consist of regenerated cellulose and regenerated paramylon. That is, Comparative Example 2 is a wet-spun fiber containing cellulose and paramylon at ratio of 50:50.

FT-IR (cm⁻¹): 3310, 2881, 1635, 1423, 1369, 1309, 1256, 1119, 1019, 889.

With respect to the mixed fibers, the moisture absorption rate, thermal properties, and physical properties of the fibers were measured under the same conditions as those for the wet-spun fibers 1. The results are shown in Table 1.

In addition, the mixed fibers were fibrillated under the same conditions as those for the wet-spun fibers 1 to investigate whether sub-micron fibrils can be prepared, but it was not possible to obtain sub-micron fibrils. FIG. 13A is a scanning electron microscope photograph showing the state of the mixed fibers after being fibrillated for 20 minutes in water. Moreover, FIG. 13B is an enlarged view of FIG. 13A. As shown in FIGS. 13A and 13B, almost no sub-micron fibrils were prepared by only fibrillating the mixed fibers in water. Referring to FIG. 13B, it can be understood that lines (streaks) are formed on the monofilament surface of the mixed fibers, but no fibers with peach skins or porous fibers were prepared. That is thought to be because in the mixed fibers, the bonds between fibrils that constitute the monofilaments are strong, and the fibrils could not be freed under the same fibrillation treatment conditions as those for the wet-spun fibers 1 consisting only of β-1,3-glucan. These results confirmed that the characteristic wherein sub-micron fibrils are readily prepared by a fibrillation treatment in water is unique to wet-spun fibers containing only β-1,3-glucan as a constituent molecule.

**Table 1**

| | | EXAMPLE 1 | EXAMPLE 2 | EXAMPLE 3 | EXAMPLE 4 | COMP. EX. 1 | COMP. EX. 2 |
|---|---|---|---|---|---|---|---|
| | | WET-SPUN FIBERS 1 | WET-SPUN FIBERS 2 | WET-SPUN FIBERS 3 | WET-SPUN FIBERS 4 | CELLULOSE FIBERS | MIXED FIBERS |
| MATERIAL | | PARAMYLON (B-1,3-GLUCAN) | | | | CELLULOSE (5-1,4-GLUCAN) | CELLULOSE/ PARAMYLON |
| PRODUCTION METHOD | | METHOD (I) | METHOD (II) | METHOD (II) | METHOD (II) | VISCOSE METHOD | VISCOSE METHOD/ METHOD (I) |
| MOISTURE ABSORPTION RATE (20°C/65% RH) | (%) | 15.9 | 4.5 | 5.1 | - | 10.8 | 14,7 |
| MOISTURE ABSORPTION RATE (20°C/97% RH) | | 38.8 | 24.1 | 24.2 | - | 26.9 | 33.2 |
| DECOMPOSITION TEMPERATURE | (°C) | 296.5 | 291.9 | 291.7 | - | 267 | 305.7 |
| ELONGATION | (%) | 12.4 ± 10.0 | 40.5 ± 19.6% | 29,6 ± 26.5% | - | 11.3 ± 3.9 | 1.7 ± 0.5 |
| PREPARATION OF EACH FIBER OR FIBRIL BY FIBRILLATION | FIBERS HAVING PEACH SKIN | POSSIBLE | POSSIBLE | POSSIBLE | POSSIBLE | NOT POSSIBLE | NOT POSSIBLE |
| | POROUS FIBERS | POSSIBLE | POSSIBLE | POSSIBLE | POSSIBLE | NOT POSSIBLE | NOT POSSIBLE |
| | SUB-MICRON FIBRILS | POSSIBLE | POSSIBLE | POSSIBLE | POSSIBLE | NOT POSSIBLE | NOT POSSIBLE |

As shown in Table 1, wet-spun fibers containing only β-1,3-glucan as a constituent molecule can be obtained by employing the production method of wet-spun fibers of the present invention. The wet-spun fibers 1-4 described in Examples 1-4 are fibers including 100% paramylon. Moreover, the wet-spun fibers 1 with 100% regenerated paramylon demonstrated a higher moisture absorption rate than that of the cellulose fibers in Comparative Example 1. In addition, the decomposition temperature of the wet-spun fibers 1 were found to be higher than that of the cellulose fibers. Furthermore, from the results of the tensile test, it is understood that the elongation of the wet-spun fibers 1-4 is higher than that of the fibers in Comparative Examples 1 and 2. In particular, the wet-spun fibers 2 and 3 with 100% regenerated paramylon had an elongation two to three times greater than that of the cellulose fibers in Comparative Example 1. The wet-spun fibers according to the present invention having such properties can be expected to be applied to moisture-absorbing and heat-generating fibers, linings for clothing, and the like.

Moreover, it was understood that sub-micron fibrils can be prepared by fibrillating the wet-spun fibers 1-4 in water. It was understood that the wet-spun fibers 1-3 are fibrillated in stages into fibers having a peach skin, porous fibers, and sub-micron fibrils, depending on the time of the fibrillation treatment. Note that it is inferred that performing the fibrillation treatment under milder conditions than those for the wet-spun fibers 4 enables preparation of fibers having a peach skin and porous fibers. Although dependent upon the conditions of the fibrillation treatment, by fibrillating these wet-spun fibers 1-4 for 5-60 minutes in water, the monofilaments were completely fibrillated to leave only sub-micron fibrils. Meanwhile, when the cellulose and mixed fibers were fibrillated under the same conditions, only a few sub-micron fibrils peeled off from the monofilament surface, and the monofilaments were not completely fibrillated. From these results, it was also understood that in the wet-spun fibers according to the present invention, sub-micron fibrils containing only β-1,3-glucan as a constituent molecule can be prepared by a fibrillation treatment. The prepared sub-micron fibrils can not only be applied as fillers for resin reinforcement, and the like, but can also be re-spun and reused as fibers. The wet-spun fibers and sub-micron fibrils according to the present invention are novel wet-spun fibers and fibrils that were previously unknown.

### INDUSTRIAL APPLICABILITY

The wet-spun fibers according to the present invention are expected to be applied to moisture-absorbing and heat-generating fibers, linings for clothing, and the like. Moreover, the sub-micron fibrils according to the present invention can not only be applied as fillers for resin reinforcement, and the like, but can also be re-spun and reused as fibers.

## Claims

1. Wet-spun fibers comprising only β-1,3-glucan, represented by the following Chemical Formula (1), as a constituent molecule 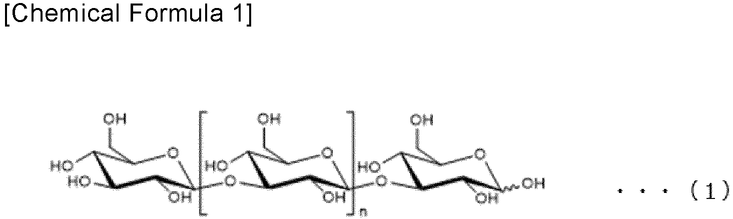 (in Chemical Formula (1), n represents an integer from 60 to 3,000).

2. The wet-spun fibers according to claim 1, wherein the β-1,3-glucan comprises regenerated paramylon.

3. The wet-spun fibers according to claim 1, wherein the β-1,3-glucan comprises purified paramylon.

4. The wet-spun fibers according to claim 1 or 2, wherein the wet-spun fibers have a moisture absorption rate of more than 11% at a temperature of 20°C and a humidity of 65%.

5. The wet-spun fibers according to any one of claims 1 to 4, wherein a monofilament of the wet-spun fibers is an aggregate of sub-micron fibrils comprising only the β-1,3-glucan as a constituent molecule.

6. A method for producing the wet-spun fibers according to any one of claims 1 to 5, the method comprising:
preparing spun fibers from a β-1,3-glucan raw material, represented by the following Chemical Formula (1), by a method (I) in which viscose is prepared from the β-1,3-glucan raw material, or a method (II) in which the β-1,3-glucan raw material is dissolved in a good solvent 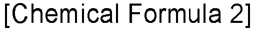 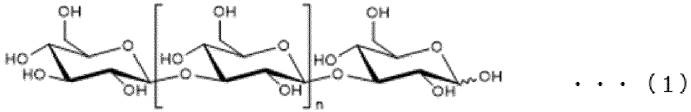 (in Chemical Formula (1), n represents an integer from 60 to 3,000).

7. The method for producing the wet-spun fibers according to claim 6, wherein the method (I) comprises:
(i) preparing viscose by introducing xanthate groups to the β-1,3-glucan raw material in an alkali aqueous solution; and
(ii) obtaining spun fibers of β-1,3-glucan by extruding the viscose through a nozzle into a coagulation liquid and removing the xanthate groups.

8. The method for producing the wet-spun fibers according to claim 6, wherein the method (II) comprises obtaining spun fibers of β-1,3-glucan by extruding a dope solution, in which the β-1,3-glucan raw material is dissolved in a good solvent including an aprotic solvent, through a nozzle, into a coagulation liquid.

9. The method for producing the wet-spun fibers according to any one of claims 6 to 8, wherein the methods (I) and (II) comprise dehydrating the spun fibers by immersing the obtained spun fibers in alcohol.

10. The method for producing the wet-spun fibers according to any one of claims 6 to 9, wherein the β-1,3-glucan raw material comprises paramylon.

11. A compound for producing the wet-spun fibers according to any of claims 1 to 5, wherein the compound is a β-1,3-glucan that contains xanthate groups, represented by the following chemical formula (2) 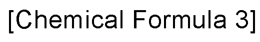 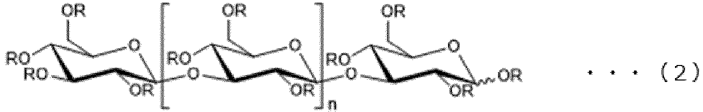 (in Chemical Formula (2), R represents hydrogen or C(=S) S⁻Na⁺, at least one R is C(=S) S⁻Na⁺, and n represents an integer from 60 to 3,000).

12. A method for producing the compound for producing wet-spun fibers according to claim 11, the method comprising:
introducing xanthate groups to a β-1,3-glucan raw material, represented by the following Chemical Formula (1), in an alkali aqueous solution 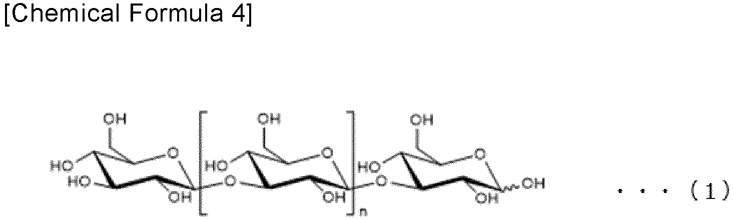 (in Chemical Formula (1), n represents an integer from 60 to 3,000).

13. The method for producing the compound for producing wet-spun fibers, according to claim 12, wherein the β-1,3-glucan raw material comprises paramylon.

14. Sub-micron fibrils comprising only β-1,3-glucan, represented by the following Chemical Formula (1), as a constituent molecule 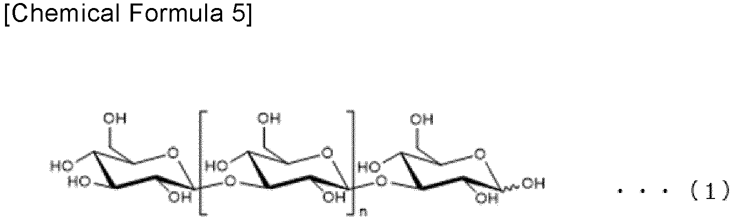 (in Chemical Formula (1), n represents an integer from 60 to 3,000).

15. The sub-micron fibrils according to claim 14, wherein the β-1,3-glucan comprises at least one paramylon selected from purified paramylon and regenerated paramylon.

16. A method for producing the sub-micron fibrils according to claim 14 or 15, the method comprising:
fibrillating the wet-spun fibers according to any one of claims 1 to 5 in water.
